# EUROPÄISCHE PATENTSCHRIFT

(11) **EP 3 114 739 B1**
(45) Veröffentlichungstag und Bekanntmachung des Hinweises auf die Patenterteilung: **12.12.2018**
(21) Anmeldenummer: 15708812.1
(22) Anmeldetag: 06.03.2015
(51) Int. Cl.: H02G 1/08

(54) **VORRICHTUNG ZUM EINZIEHEN VON KABELN**
DEVICE FOR PULLING IN CABLES
DISPOSITIF D'INSERTION DE CÂBLES

(30) Priorität: 07.03.2014 AT 501712014
(43) Veröffentlichungstag der Anmeldung: 11.01.2017
(73) Patentinhaber: HASLACHER & HASLACHER IMMOBILIEN & PATENTVERWALTUNGS GMBH, 5303 Thalgau (AT)
(72) Erfinder: HASLACHER, Helmut, A-5310 Mondsee (AT)
(74) Vertreter: Babeluk, Michael
(86) Internationale Anmeldenummer: PCT/EP2015/054736
(87) Internationale Veröffentlichungsnummer: WO 2015/132388

(56) Entgegenhaltungen:
- WO-A1-2010/081117
- WO-A1-2011/032953
- DE-A1- 2 744 230
- DE-A1- 3 322 104
- US-A- 5 395 091

## Beschreibung

Die Erfindung betrifft eine Vorrichtung zum Einziehen von Kabeln mit einer im Wesentlichen zylindrischen Hülse, die an einem ersten Ende eine erste Öffnung zur Verbindung mit einem Einziehelement, vorzugsweise einer Einziehfeder aufweist, wobei an einem dem ersten Ende gegenüberliegenden zweiten Ende der Hülse eine flexible Einziehfederspitze angebracht ist, die aus einem Zuganker mit einer Kunststoffhülle und einem Kopfstück mit einer Aufnahme für ein einzuziehendes Kabel besteht.

Es hat sich bewährt, Einziehfedern zum Einziehen von Kabeln mit flexiblen Spitzen auszustatten, die den Krümmungen der Rohre, in die das Kabel einzuziehen ist, besonders gut folgen können und auch beim Durchziehen des Kabels Vorteile haben.

Solche Lösungen sind beispielsweise in der WO 2011/032953 A, der KR 100786374 A, der WO 2006/027400 A oder der WO 2003/012948 A offenbart.

Es hat sich jedoch herausgestellt, dass es in schwierigen Situationen vielfach erforderlich ist, die Einziehfeder während des Vorschubs zu verdrehen, um ein Steckenbleiben zu verhindern. Dies führt beim nachfolgenden Durchziehen des Kabels zu Verdrehungen, die erhöhte Zugkräfte verursachen. Dies kann dazu führen, dass das Kabel von der Vorrichtung abreißt und der Einziehvorgang erneut begonnen werden muss.

Aufgabe der vorliegenden Erfindung ist es, eine Vorrichtung anzugeben, die diese Nachteile vermeidet und die weitere Erleichterungen beim Einziehen von Kabeln bietet.

Erfindungsgemäß werden diese Aufgaben durch die Merkmale von Patentanspruch 1 gelöst, nämlich insbesondere dadurch, dass der Zuganker frei drehbar und unverlierbar in der Hülse aufgenommen ist und dass am zweiten Ende der Hülse ein die Kunststoffhülle teilweise überdeckender Fortsatz angeordnet ist.

Wesentlich an der erfindungsgemäßen Lösung ist, dass sich das Kabel gegenüber der Einziehfeder frei drehen kann. Ein weiterer wesentlicher Aspekt besteht darin, dass die bewährte Einziehfederspitze so weiterentwickelt wird, dass sie nicht nur für das Einschieben der Einziehfeder, sondern auch für das Zurückziehen des Kabels optimiert ist. Vorteilhaft ist es in diesem Zusammenhang, wenn durch die besondere Ausbildung des die Kunststoffhülle überdeckenden Fortsatzes das Auftreten von störenden Spalten vermieden wird.

Vorzugsweise weist die Hülse in einem mittleren Abschnitt eine Aufnahmekammer für einen verdickten Endbereich des Zugankers aufweist. Der verdickte Endbereich wird durch einen Anschlag gehalten, so dass ein Herausziehen des Zugankers verhindert wird.

Eine besonders robuste und zuverlässige Lösung kann dadurch erreicht werden, dass die Kunststoffhülle um den Zuganker umspritzt ausgeführt ist.

Eine einfache Befestigung eines einzuziehenden Kabels kann erfolgen, indem die Aufnahme als Haken ausgebildet ist.

Alternativ dazu kann die Aufnahme als Öse ausgebildet sein. Dies ermöglicht eine besonders belastbare Verbindung.

Eine weitere Alternative besteht darin, dass die Aufnahme als lösbare Verbindung, vorzugsweise ein Gewinde ausgebildet ist. Dadurch wird die Möglichkeit geschaffen, in besonders gelagerten Anwendungsfällen ein spezifisches, auswechselbares Endstück, beispielsweise eine sogenannte Birne, einzusetzen.

Eine besonders begünstigte Ausführungsvariante der Erfindung sieht vor, dass in der ersten Öffnung ein Ende einer Einziehfeder eingepresst ist. Zusätzlich oder alternativ kann vorgesehen sein, dass die Verbindung zur Einziehfeder als Innengewinde ausgeführt ist. Als beste Lösung hat es sich herausgestellt, wenn sowohl ein Gewinde vorgesehen ist, als auch eine Verpressung durchgeführt wird. Dies ergibt eine besonders belastbare Verbindung.

Die Herstellung der erfindungsgemäßen Vorrichtung kann dadurch vereinfacht werden, dass der Zuganker an seinem in der Hülse aufgenommenen Ende eine aufgepresste Endhülse aufweist.

Ebenfalls einer vereinfachten Herstellung dient die Maßnahme, dass die Hülse im Axialbereich eine Durchgangsöffnung aufweist.

Es ist auch vorteilhaft, wenn der die Kunststoffhülle teilweise überdeckende Fortsatz durch eine Trennschicht von der Kunststoffhülle getrennt ist. Dadurch wird eine leichte Verdrehbarkeit gewährleistet und im Fall eines umspritzten Zugankers kann der Fortsatz als Teil der Form verwendet werden, was eine entsprechende Präzision und auch eine Vereinfachung bewirkt.

Eine weitere Erleichterung der Verdrehbarkeit kann dadurch verwirklicht werden, dass zwischen der Hülse und dem Zuganker eine in Axialrichtung belastbare Scheibe vorgesehen ist. Diese Scheibe, die bevorzugt zwischen der Endhülse und dem Anschlag angeordnet ist, wirkt in der Art eines Axial-Gleitlagers.

Eine alternative Ausführungsform sieht vor, dass am ersten Ende der zylindrischen Hülse, ein Ziehstrumpf eingepresst ist. Ein Ziehstrumpf ist ein bekannte Bauteil aus einem Drahtgeflecht, der sich bei Beanspruchung in Axialrichtung radial zusammenzieht und einen in ihm aufgenommenen Bauteil, im vorliegenden Falle eine Einziehfeder oder einen Ziehstrumpf fest aufnimmt. Damit kann eine lösbare aber belastbar Verbindung zu einer Einziehfeder oder einem Ziehstrumpf geschaffen werden.

Vorzugsweise ist an einem in die Hülse einzuführenden Anschnitt des Ziehstrumpfs eine Befestigungshülse angebracht, die vorzugsweise aufgepresst ist. Dadurch wird beim Zusammenpressen des ersten Endes der Hülse eine dauerhafte Verbindung zum Ziehstrumpf hergestellt.

Die vorliegende Erfindung betrifft auch ein Verfahren zur Herstellung einer Vorrichtung zum Einziehen von Kabeln. Dieses Verfahren wird so ausgeführt, dass an einem proximalen Ende eines Zugankers ein verdickter Endbereich geschaffen wird, danach der Zuganker in eine Hülse eingeführt wird, bis der verdickte Endbereich an einem Anschlag der Hülse anliegt, und danach eine Kunststoffhülle und an einem distalen Ende des Zugankers ein Kopfstück auf diesen Zuganker aufgebracht werden.

Bevorzugt wird an dem Zuganker eine Endhülse aufgebracht, danach wird der Zuganker in eine Hülse eingeführt, bis die Endhülse an einem Anschlag der Hülse anliegt, wonach eine Aufnahme für ein einzuziehendes Kabel und eine Kunststoffhülle auf den Zuganker aufgebracht werden.

Besonders bevorzugt ist es, wenn der Zuganker durch Kunststoff umspritzt wird und wenn beim Umspritzen auch ein von einem ringförmigen Fortsatz der Hülse umgebener Raum ausgefüllt wird, ohne eine feste Verbindung des Kunststoffs mit der Hülse zu bewirken. Dies erfolgt beim Umspritzen in natürlicher Weise, da sich der Kunststoff beim Abkühlen kontrahiert und sich damit von der Hülse ablöst.

Alternativ ist es aber auch möglich, eine vorgefertigte Kunststoffhülle vom distalen Ende her auf den Zuganker aufzuschieben und danach das Kopfstück zu montieren.

Umspritzen bezeichnet eine Technologie, bei der die Hülse samt Zuganker in eine Form eingelegt wird und im Spritzgussverfahren mit Kunststoff umhüllt wird. Damit ergibt sich eine besonders innige Verbindung des Kunststoffs mit dem Zuganker, was zu einer entsprechend robusten Ausführung beiträgt.

In der Folge wird die Erfindung durch die in den Zeichnungen dargestellten Ausführungsvarianten näher erläutert. Es zeigen:

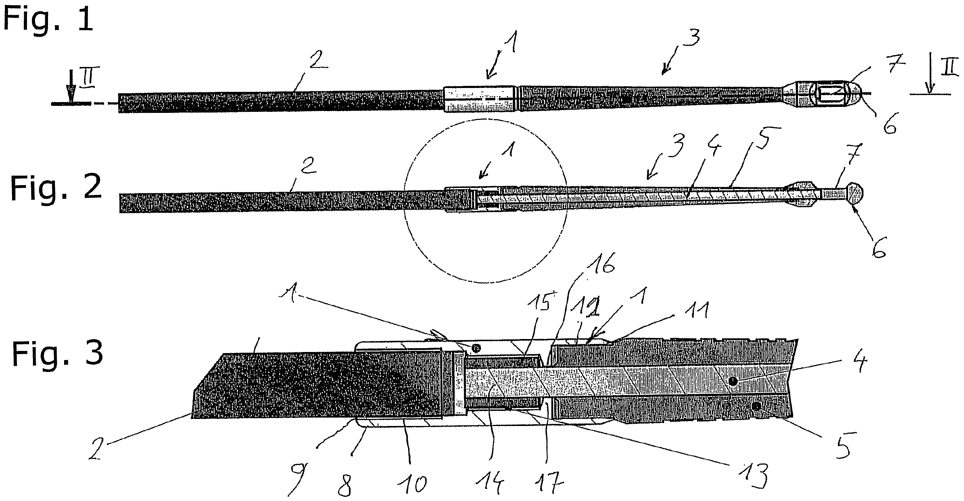

- Fig. 1: eine erste Ausführungsvariante der erfindungsgemäßen Vorrichtung in einer seitlichen Ansicht;
- Fig. 2: einen Schnitt nach Linie II - II in Fig. 1;
- Fig. 3: ein Detail von Fig. 2 in vergrößertem Maßstab;
- Fig. 4: eine zweite Ausführungsvariante in einer seitlichen Ansicht;
- Fig. 5: einen Schnitt nach Linie V - V in Fig. 4;
- Fig. 6: ein Detail von Fig. 5 in vergrößertem Maßstab;
- Fig. 7: bis Fig. 12 schematisch die Abfolge des Verfahrens zur Herstellung der erfindungsgemäßen Vorrichtung;
- Fig. 13: die fertige Vorichtung in einer seitlichen Ansicht; und
- Fig. 14: ein Detail von Fig. 12 in vergrößertem Maßstab.

In einer Hülse 1, die im Wesentlichen zylindrisch ausgeführt ist, ist einerseits eine Einziehfeder 2 und am in Axialrichtung gegenüberliegenden Ende eine flexible Einziehfederspitze 3 angebracht ist, die aus einem Zuganker 4 mit einer Kunststoffhülle 5 und einem Kopfstück 6 mit einer Aufnahme 7 für ein hier nicht dargestelltes einzuziehendes Kabel besteht. Die Aufnahme 7 ist hier als Öse ausgebildet.

Die Hülse 1 weist ein erstes Ende 8 auf, in deren Stirnseite eine erste Öffnung 9 vorgesehen ist, durch die die Einziehfeder eingeführt, und zwar eingeschraubt ist, da im Inneren des Endes 8 ein Innengewinde 10 vorgesehen ist. Zusätzlich dazu wird bei der Herstellung das erste Ende 8 durch Anwendung von radial nach innen gerichteten Druck mit der Einziehfeder verpresst, um eine besonders haltbare Verbindung herzustellen.

Am gegenüberliegenden Ende 11 des Hülse 1 ist ein zylindrischer Fortsatz 12 vorgesehen, der die Kunststoffhülle 5 umgibt, ohne ihre Verdrehung zu behindern. Dazu kann der Fortsatz 12 innen mit Teflon oder einem anderen Werkstoff beschichtet sein.

Im mittleren Bereich der Hülse 1 ist eine Aufnahmekammer 13 vorgesehen, die zum Fortsatz 12 hin durch einen Anschlag 17 begrenzt ist. Die Einziehfeder 4 besitzt ein verdicktes Ende 14, das durch eine aufgepresste Endhülse 15 gebildet ist, die sich am Anschlag 17 abstützt.

Eine Durchgangsöffnung 16 ermöglicht es, den Zuganker 4 mit der bereits aufgepressten Endhülse 15 bei der Herstellung der Vorrichtung von dem ersten Ende 8 her in die Hülse 1 einzustecken.

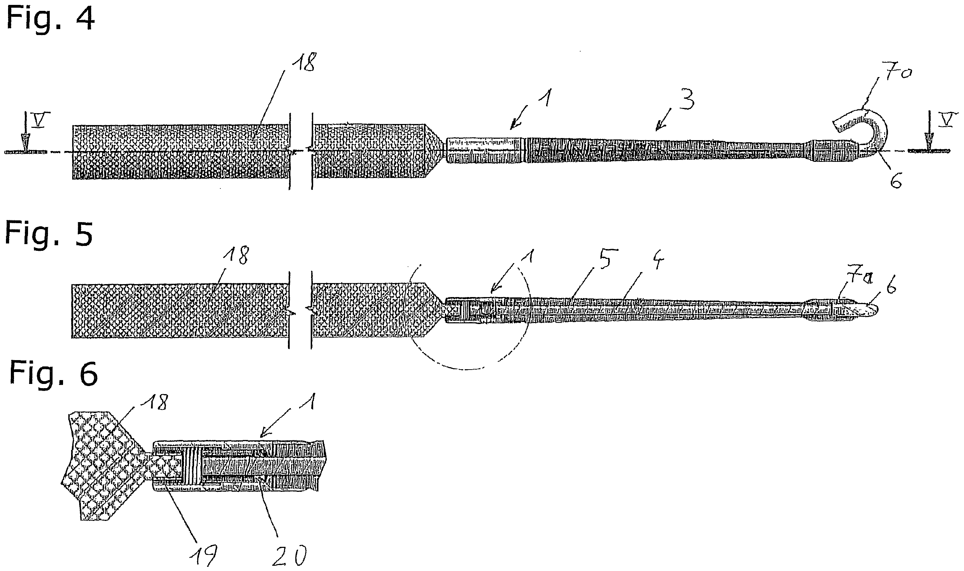

Bei der Ausführungsvariante von Fig. 4 bis Fig. 6 ist an Stelle der Einziehfeder ein Ziehstrumpf 18 in die Hülse 1 eingepresst. Eine Befestigungshülse 19 ist vorgesehen, um beim Verpressen einen entsprechenden Gegendruck aufzubauen. Eine in Axialrichtung belastbare Scheibe 20 dient als Axial-Gleitlager, um die Verdrehung zu erleichtern. Bei dieser Ausführungsvariante ist die Aufnahme 7a hier als Haken ausgebildet.

Der Vorteil dieser Ausführungsvariante besteht auch darin, dass man beim Zurückziehen, also dem eigentlichen Einziehen des Kabels, die Vorrichtung so verwenden kann, dass das Kabel durch den Ziehstrumpf gehalten wird und sich entsprechend verdrehen kann.

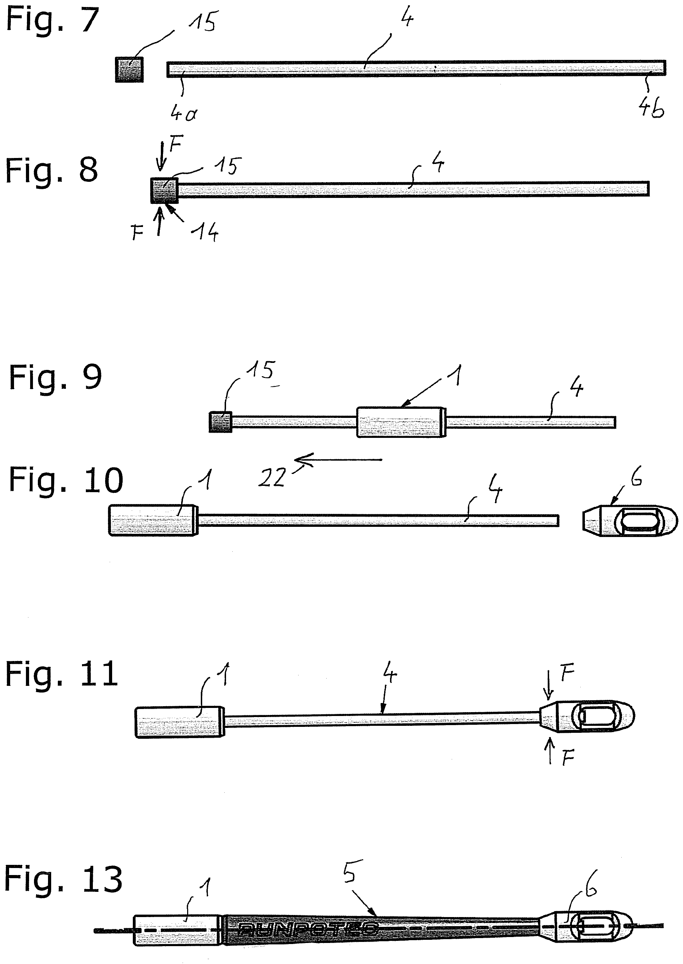

In den Fig. 7 bis Fig. 10 wird der Ablauf einer bevorzugten Variante des Verfahrens zur Herstellung der obigen Vorrichtung erläutert.

Im ersten Schritt, der in den Fig. 7 und Fig. 8 dargestellt ist, wird durch das Aufbringen einer Endhülse 15 auf das proximale Ende 4a des Zugankers 4 ein verdickter Endbereich 14 geschaffen. Die Endhülse 15 wird durch radiale Kräfte F aufgepresst, gegebenenfalls kann zusätzlich eine Verschweißung 21 zu Sicherung an der Stirnseite aufgebracht werden.

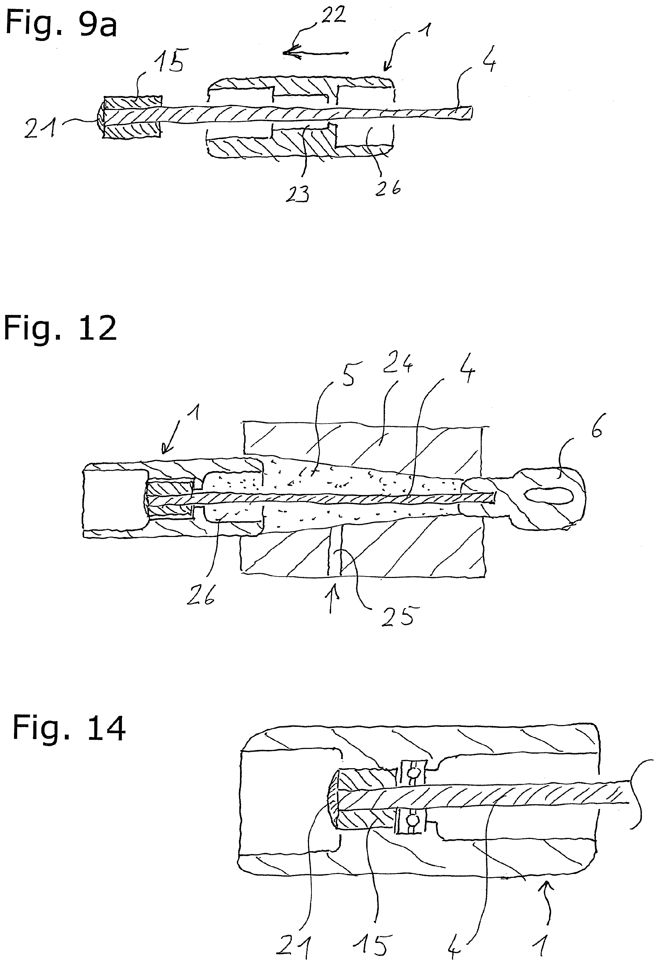

In dem in der Fig. 9 dargestellten zweiten Schritt wird eine Hülse 1 in der Richtung des Pfeils 22 vom distalen Ende 4b in Richtung des proximalen Endes 4a des Zugankers 4 vorgeschoben, bis die Endhülse 15 drehbar in einer Ausnehmung 23 der Hülse 1 aufgenommen ist. Dies ist im Detail in der Fig. 9a dargestellt.

In Fig. 10 und Fig. 11 ist das Aufbringen eines Kopfstücks 6 am distalen Ende 4b des Zugankers 4 gezeigt, wobei hier wiederum eine Verpressung durch radiale Kräfte F erfolgt. Nicht dargestellt ist eine mögliche zusätzliche Verschweißung an der Verbindungsstelle. Alternativ kann eine Verschraubung des Kopfstücks 6 am Zuganker 4 erfolgen.

Die Fig. 12 zeigt die Herstellung der Kunststoffhülle 5 durch Umspritzen, indem die in Fig. 9 dargestellte Baugruppe in eine Form 24 eingelegt wird und über einen Kanal 25 Kunststoff eingepresst wird. Der Kunststoff verbindet sich innig mit dem Zuganker 4 und dringt auch in die Ausnehmung 26 der Hülse 1 ein. Durch die Schrumpfung des Kunststoffs beim Abkühlen erfolgt allerdings keine Verbindung der Kunststoffhülle 5 mit der Hülse 1, so dass die freie Drehbarkeit erhalten bleibt.

In einem alternativen Herstellungsverfahren, das in den Figuren nicht dargestellt ist, wird die Hülse 1 zunächst vom proximalen Ende her auf den bereits mit dem Kopfstück versehenen Zuganker 4 aufgeschoben. Nach dem Aufpressen der Endhülse 15 wird die Hülse 1wieder zurück in Richtung des proximalen Endes 4a geschoben, worauf der weitere Herstellungsvorgang wie oben erfolgt.

In Fig. 14 ist gezeigt, dass die leichte Verdrehbarkeit durch ein Axialwälzlager 20, das hier als Axialkugellager ausgeführt ist, sichergestellt ist. Da das Axialwälzlager 20 zwischen der Endhülse 15 und der Hülse 1 angeordnet ist, können auch unterstarken Zugkräften geringe Reibmomente realisiert werden.

## Patentansprüche

1. Vorrichtung zum Einziehen von Kabeln oder dgl. mit einer im Wesentlichen zylindrischen Hülse (1), die an einem ersten Ende (8) eine erste Öffnung (9) zur Verbindung mit einem Einziehelement, vorzugsweise einer Einziehfeder (2) aufweist, wobei an einem dem ersten Ende (8) gegenüberliegenden zweiten Ende (11) der Hülse (1) eine flexible Einziehfederspitze (3) angebracht ist, die aus einem Zuganker (4) mit einer Kunststoffhülle (5) und einem Kopfstück (6) mit einer Aufnahme (7, 7a) für ein einzuziehendes Kabel besteht, **dadurch gekennzeichnet, dass** der Zuganker (4) frei drehbar und unverlierbar in der Hülse (1) aufgenommen ist und dass am zweiten Ende (11) der Hülse (1) ein die Kunststoffhülle (5) teilweise überdeckender Fortsatz (12) vorgesehen ist.

2. Vorrichtung nach Anspruch 1, **dadurch gekennzeichnet, dass** die Hülse (1) in einem mittleren Abschnitt eine Aufnahmekammer (13) für einen verdickten Endbereich (14) des Zugankers (4) aufweist.

3. Vorrichtung nach einem der Ansprüche 1 oder 2, **dadurch gekennzeichnet, dass** die Kunststoffhülle (5) um den Zuganker (4) umspritzt ausgeführt ist.

4. Vorrichtung nach einem der Ansprüche 1 bis 3, **dadurch gekennzeichnet, dass** die Aufnahme (7) als Öse ausgebildet ist.

5. Vorrichtung nach einem der Ansprüche 1 bis 4, **dadurch gekennzeichnet, dass** die Aufnahme (7) als lösbare Verbindung, vorzugsweise ein Gewinde ausgebildet ist.

6. Vorrichtung nach einem der Ansprüche 1 bis 5, **dadurch gekennzeichnet, dass** in der ersten Öffnung (9) ein Ende einer Einziehfeder (2) eingepresst ist.

7. Vorrichtung nach einem der Ansprüche 1 bis 6, **dadurch gekennzeichnet, dass** die Verbindung zur Einziehfeder (2) als Innengewinde (10) ausgeführt ist.

8. Vorrichtung nach einem der Ansprüche 1 bis 7, **dadurch gekennzeichnet, dass** der Zuganker (4) an seinem in der Hülse (1) aufgenommenen proximalen Ende (4a) eine aufgepresste Endhülse (15) aufweist.

9. Vorrichtung nach einem der Ansprüche 1 bis 8, dass zwischen der Hülse (1) und dem Zuganker (4) ein Axiallager (20) vorgesehen ist, das vorzugsweise als Axialwälzlager ausgebildet ist.

10. Vorrichtung nach einem der Ansprüche 1 bis 9, **dadurch gekennzeichnet, dass** das Kopfstück (6) am Zuganker aufgepresst ist.

11. Vorrichtung nach einem der Ansprüche 1 bis 10, **dadurch gekennzeichnet, dass** die Einziehfeder (2) eine vorzugsweise verdrillte Kunststofffeder ist.

12. Verfahren zur Herstellung einer Vorrichtung zum Einziehen von Kabeln, bei dem an einem proximalen Ende (4a) eines Zugankers (4) ein verdickter Endbereich (14) geschaffen wird, danach der Zuganker (4) in eine Hülse (1) eingeführt wird, bis der verdickte Endbereich (14) an einem Anschlag (17) der Hülse (1) anliegt, und danach eine Kunststoffhülle (5) und an einem distalen Ende (4b) des Zugankers (4) ein Kopfstück (6) auf diesen Zuganker (4) aufgebracht werden, wobei die Hülse (1) gegenüber dem Zuganker (4) und der Kunststoffhülle (5) frei drehbar bleibt.

13. Verfahren nach Anspruch 12, **dadurch gekennzeichnet, dass** eine vorgefertigte Kunststoffhülle (5) auf den Zuganker aufgeschoben wird und danach das Kopfstück (6) aufgebracht wird.

14. Verfahren nach Anspruch 12, **dadurch gekennzeichnet, dass** der Zuganker (4) durch Kunststoff umspritzt wird, um die Kunststoffhülle (5) zu bilden, und dass beim Umspritzen auch ein von einem ringförmigen Fortsatz der Hülse (1) umgebener Raum ausgefüllt wird, ohne eine feste Verbindung des Kunststoffs mit der Hülse (1) zu bewirken.

15. Verfahren nach einem der Ansprüche 12 bis 14, **dadurch gekennzeichnet, dass** der verdickte Endbereich (14) durch Aufpressen einer Endhülse (15) auf das proximale Ende (4a) des Zugankers (4) gebildet wird.

16. Verfahren nach einem der Ansprüche 12 bis 15, **dadurch gekennzeichnet, dass** zuerst die Hülse (1) vom proximalen Ende (4a) her auf den Zuganker (4) aufgeschoben wird, danach der verdickte Endbereich (14) geschaffen wird, danach die Hülse (1) zurückgeschoben wird, bis der verdickte Endbereich (14) an einem Anschlag (17) der Hülse (1) anliegt, und danach die Kunststoffhülle (5) und das Kopfstück (6) aufgebracht werden.

## Claims

1. Device for retracting cables or the like comprising a substantially cylindrical sleeve (1), which has a first opening (9) at a first end (8) for connection to a retraction element, preferably a retraction spring (2), wherein a flexible retraction spring tip (3), which consists of a traction anchor (4) comprising a plastic sleeve (5) and a head part (6) comprising a receptacle (7, 7a) for a cable to be retracted, is attached at a second end (11) of the sleeve (1) opposite to the first end (8), **characterised in that** the traction anchor (4) is accommodated so it is freely rotatable and captive in the sleeve (1), and an extension (12) partially overlapping the plastic sleeve (5) is provided at the second end (11) of the sleeve (1).

2. Device according to claim 1, **characterised in that** the sleeve (1) has a receptacle chamber (13) for a thickened end region (14) of the traction anchor (4) in a middle section.

3. Device according to any one of claims 1 or 2, **characterised in that** the plastic sleeve (5) is embodied as extrusion coated around the traction anchor (4).

4. Device according to any one of claims 1 to 3, **characterised in that** the receptacle (7) is formed as an eye.

5. Device according to any one of claims 1 to 4, **characterised in that** the receptacle (7) is formed as a detachable connection, preferably a thread.

6. Device according to any one of claims 1 to 5, **characterised in that** one end of a retraction spring (2) is pressed into the first opening (9).

7. Device according to any one of claims 1 to 6, **characterised in that** the connection to the retraction spring (2) is embodied as an internal thread (10).

8. Device according to any one of claims 1 to 7, **characterised in that** the traction anchor (4) has a pressed-on end sleeve (15) on its proximal end (4a) accommodated in the sleeve (1).

9. Device according to any one of claims 1 to 8, **characterised in that** an axial bearing (20), which is preferably designed as an axial roller bearing, is provided between the sleeve (1) and the traction anchor (4).

10. Device according to any one of claims 1 to 9, **characterised in that** the head part (6) is pressed onto the traction anchor.

11. Device according to any one of claims 1 to 10, **characterised in that** the retraction spring (2) is a preferably twisted plastic spring.

12. Method for producing a device for retracting cables, in which a thickened end region (14) is provided at a proximal end (4a) of a traction anchor (4), the traction anchor (4) is then inserted into a sleeve (1) until the thickened end region (14) abuts a stop (17) of the sleeve (1), and then a plastic sleeve (5) and, on a distal end (4b) of the traction anchor (4), a head part (6) are applied to this traction anchor (4), wherein the sleeve (1) remains freely rotatable in relation to the traction anchor (4) and the plastic sleeve (5).

13. Method according to claim 12, **characterised in that** a prefinished plastic sleeve (5) is pushed onto the traction anchor and the head part (6) is applied thereafter.

14. Method according to claim 12, **characterised in that** the traction anchor (4) is extrusion coated by plastic in order to form the plastic sleeve (5), and a space enclosed by a ring-shaped extension of the sleeve (1) is also filled during the extrusion coating without effectuating a fixed connection of the plastic to the sleeve (1).

15. Method according to any one of claims 12 to 14, **characterised in that** the thickened end region (14) is formed by pressing an end sleeve (15) onto the proximal end (4a) of the traction anchor (4).

16. Method according to any one of claims 12 to 15, **characterised in that** firstly the sleeve (1) is pushed from the proximal end (4a) onto the traction anchor (4), the thickened end region (14) is then provided, the sleeve (1) is then pushed back until the thickened end region (14) abuts a stop (17) of the sleeve (1), and the plastic sleeve (5) and the head part (6) are then applied.

## Revendications

1. Dispositif permettant d'insérer en les tirant des câbles ou similaires comprenant un manchon (1) essentiellement cylindrique qui comporte à une première extrémité (8) une première ouverture (9) de liaison avec un élément de tirage, de préférence un ressort de tirage (2), à la seconde extrémité (11) du manchon (1) située à l'opposé de la première extrémité (8) étant montée une pointe élastique de tirage (3) qui est constituée par une tige de traction (4) ayant une enveloppe en matériau synthétique (5) et par une pièce de tête (6) ayant un logement de réception (7, 7a) d'un câble à tirer,
**caractérisé en ce que**
la tige de traction (4) est logée librement mobile en rotation est de manière imperdable dans le manchon (1), et, à la seconde extrémité (11) du manchon (1) est prévu un prolongement (12) recouvrant partiellement l'enveloppe en matériau synthétique (5).

2. Dispositif conforme à la revendication 1,
**caractérisé en ce que**
le manchon (1) comporte, dans un segment médian une chambre de réception (13) d'une zone d'extrémité épaissie (14) de la tige de traction (4).

3. Dispositif conforme à l'une des revendications 1 et 2,
**caractérisé en ce que**
l'enveloppe en matériau synthétique (5) est injectée autour de la tige de traction (4).

4. Dispositif conforme à l'une des revendications 1 à 3,
**caractérisé en ce que**
le logement de réception (7) est réalisé sous la forme d'un oeillet.

5. Dispositif conforme à l'une des revendications 1 à 4,
**caractérisé en ce que**
le logement de réception (7) est réalisé sous la forme d'une liaison amovible, de préférence d'un filetage.

6. Dispositif conforme à l'une des revendications 1 à 5,
**caractérisé en ce qu'**
une extrémité d'un ressort de tirage (2) est introduit à force dans la première ouverture (9).

7. Dispositif conforme à l'une des revendications 1 à 6,
**caractérisé en ce que**
la liaison avec le ressort de tirage (2) est réalisé sous la forme d'un filetage interne (10).

8. Dispositif conforme à l'une des revendications 1 à 7,
**caractérisé en ce que**
la tige de traction (4) comporte, à son extrémité proximale (4a) logée dans le manchon (1) un manchon d'extrémité (15) emmanchée à force.

9. Dispositif conforme à l'une des revendications 1 à 8,
**caractérisé en ce qu'**
il est prévu entre le manchon (1) et la tige de traction (4) un palier axial (20) qui est de préférence réalisé sous la forme d'un palier de roulement axial.

10. Dispositif conforme à l'une des revendications 1 à 9,
**caractérisé en ce que**
la pièce de tête (6) est emmanchée à force sur la tige de traction.

11. Dispositif conforme à l'une des revendications 1 à 10,
**caractérisé en ce que**
le ressort de tirage (2) est un ressort en matériau synthétique, de préférence torsadé.

12. Procédé d'obtention d'un dispositif permettant d'insérer, en les tirant, des câbles, selon lequel, à une extrémité proximale (4a) d'une tige de traction (4) est créée une zone d'extrémité épaissie (14), puis, la tige de traction (4) est introduite dans un manchon (1) jusqu'à ce que la zone d'extrémité épaissie (14) s'applique sur une butée (17) du manchon (1), et, ensuite, sont positionnées sur la tige de traction (4) une enveloppe en matériau synthétique (5) et, à l'extrémité distale (4b) de cette tige de traction (4), une pièce de tête (6), le manchon (1) restant librement mobile en rotation par rapport à la tige de traction (4) et à l'enveloppe en matériau synthétique (5).

13. Procédé conforme à la revendication 12,
**caractérisé en ce qu'**
une enveloppe en matériau synthétique (5) préfabriquée est glissée sur la tige de traction (4) puis la pièce de tête (6) est mise en place.

14. Procédé conforme à la revendication 12,
**caractérisé en ce que**
du matériau synthétique est injecté autour de la tige de traction (4) pour former l'enveloppe en matériau synthétique (5), et, lors de l'injection, un espace entouré par un prolongement annulaire du manchon (1) est également rempli sans provoquer une liaison solidaire du matériau synthétique avec le manchon (1).

15. Procédé conforme à l'une des revendications 12 à 14,
**caractérisé en ce que**
la zone d'extrémité épaissie (14) est formée en emmanchant à force un manchon d'extrémité (15) sur l'extrémité proximale (4a) de la tige de traction (4).

16. Procédé conforme à l'une des revendications 12 à 15,
**caractérisé en ce que**
le manchon (1) est tout d'abord glissé sur la tige de traction (4) à partir de son extrémité proximale (4a), puis, la zone d'extrémité épaissie (14) est créée, et ensuite, le manchon (1) est repoussé jusqu'à ce que la zone d'extrémité épaissie (14) s'applique sur une butée (17) du manchon (1), puis, l'enveloppe en matériau synthétique (5) et la pièce de tête (6) sont mises en place.
